# EUROPEAN PATENT SPECIFICATION

(11) **EP 3 703 082 B1**
(45) Date of publication and mention of the grant of the patent: **10.01.2024**
(21) Application number: 18871407.5
(22) Date of filing: 26.10.2018
(51) Int. Cl.: H01B 1/04, H01B 5/08, C01B 32/158, H01B 7/42, H01B 7/00, C01B 32/168

(54) **CARBON NANOTUBE-COATED ELECTRIC WIRE**
KOHLENSTOFFNANORÖHRCHEN-BESCHICHTETER ELEKTRISCHER DRAHT
FIL ÉLECTRIQUE EN NANOTUBES DE CARBONE REVÊTU

(30) Priority: 26.10.2017 JP 2017207663
(43) Date of publication of application: 02.09.2020
(73) Proprietor: Furukawa Electric Co., Ltd., Chiyoda-ku Tokyo 100-8322 (JP)
(72) Inventor: YAMASHITA, Satoshi, Tokyo 100-8322 (JP); AIZAWA, Hideki, Tokyo 100-8322 (JP); YAMAZAKI, Satoshi, Tokyo 100-8322 (JP)
(74) Representative: Gunzelmann, Rainer
(86) International application number: PCT/JP2018/039968
(87) International publication number: WO 2019/083026

(56) References cited:
- EP-A1- 3 703 078
- WO-A1-2016/186263
- WO-A1-2017/033482
- JP-A- 2015 079 671
- JP-A- 2017 106 129
- JP-A- 2017 171 545
- US-A1- 2012 004 702
- US-A1- 2014 231 118
- LUKASZ KURZEPA ET AL: "Replacing Copper Wires with Carbon Nanotube Wires in Electrical Transformers", ADVANCED FUNCTIONAL MATERIALS, WILEY - V C H VERLAG GMBH & CO. KGAA, DE, vol. 24, no. 5, 5 February 2014 (2014-02-05), pages 619-624, XP001588511, ISSN: 1616-301X, DOI: 10.1002/ADFM.201302497 [retrieved on 2013-09-17]
- LEKAWA-RAUS AGNIESZKA ET AL: "Towards the development of carbon nanotube based wires", CARBON, vol. 68, 1 March 2014 (2014-03-01), pages 597-609, XP055814489, GB ISSN: 0008-6223, DOI: 10.1016/j.carbon.2013.11.039

## Description

### Technical Field

The present invention relates to a coated carbon nanotube electric wire, in which a carbon nanotube wire configured of a plurality of carbon nanotubes is coated with an insulating material.

### Background Art

A carbon nanotube (hereinafter, also referred to as a "CNT") is a material that has various properties and has been expected to be applied to a large number of fields.

For example, the CNT is a three-dimensional mesh structure element configured of a single layer of a tubular element that has a mesh structure of hexagonal lattices or of multiple layers substantially coaxially disposed, has a light weight, and has various excellent properties such as electroconductivity, heat conductivity, and mechanical strength. However, it is not easy to form the CNT as a wire, and no technologies using the CNT as a wire have been proposed.

As one of a small number of examples of technologies using CNT wires, using CNTs instead of metal that is a material buried in a via hole formed in a multilayer wiring structure has been examined. Specifically, a wiring structure using, as an interlayer wiring for two or more conductive layers, a multilayer CNT that are stretched coaxially from a growth start point of the multilayer CNT to an end on a further side and that have a plurality of cut surfaces each brought into contact with the conductive layers in order to reduce a resistance of the multilayer wiring structure has been proposed (Patent Literature 1).

As another example, a CNT material in which an electroconductive deposition made of metal or the like is formed at an electrical junction of adjacent CNT wires in order to further improve electroconductivity of the CNT material has been proposed, and there is a disclosure that it is possible to apply such a CNT material to a wide range of applications (Patent Literature 2). Also, a heater that has a heat conductive member made of a matrix of CNTs using excellent heat conductivity that CNT wires exhibit has been proposed (Patent Literature 3).

On the other hand, electric wires, each of which includes a core wire configured of one or a plurality of wires and an insulating coating that coats the core wire, have been used as electric wires and signal wires in a variety of fields of vehicles, industrial devices, and the like. Copper or copper alloys are typically used as materials for the wires configuring core wires in terms of electrical characteristics, and aluminum or aluminum alloys have been proposed in recent years in terms of weight reduction. For example, a specific weight of aluminum is about 1/3 of a specific weight of copper, and electric conductivity of aluminum is about 2/3 of electric conductivity of copper (in a case in which the electric conductivity of pure copper is defined as a reference of 100%IACS, the electric conductivity of pure aluminum is about 66%IACS). In order to cause the same amount of current as that flowing through a copper wire to flow through an aluminum wire, it is necessary to increase the sectional area of the aluminum wire to about 1.5 times the sectional area of the copper wire. However, even if such an aluminum wire with an increased sectional area is used, the mass of the aluminum wire is about a half of the mass of the copper wire. Therefore, it is advantageous to use the aluminum wire in terms of weight reduction.

Also, further enhancement of performances and functions of vehicles, industrial devices, and the like has been carried out, and with this trend, there is a trend that the voltage applied to various electric devices and control devices increases. Thus, there has been a requirement for improving heat dissipation ability of electric wires without degrading voltage endurance due to insulating coating. On the other hand, there has also been a requirement for reducing weights of wires in order to improve power consumption of mobile bodies such as vehicles for environmental compatibility.

### Document List

### Patent Literatures

Patent Literature 1: Japanese Patent Application Publication No. 2006-120730
Patent Literature 2: National Publication of International Patent Application No. 2015-523944
Patent Literature 3: Japanese Patent Application Publication No. 2015-181102

EP 3 703 078 A1 constitutes a prior art document under Art. 54(3) EPC and describes a coated carbon nanotube electric wire formed by coating a carbon nanotube wire formed by a plurality of carbon nanotubes with an insulating material. The carbon nanotube wires may be twisted together into a twisted wire and the possibility of adjusting the equivalent circle diameter and the sectional area of the carbon nanotube wire.

US 2014/231118 A1 describes a method of insulating electrically conducting fibers comprising carbon nanotubes to prevent infiltration of the insulating material into the voids surrounding the carbon nanotubes, which disrupts the electrical properties of the fibers.

US 2012/004702 A1 describes a pacemaker lead including a plurality of bodies covered by an insulation layer. The body includes at least one carbon nanotube yarn. Each of the carbon nanotube yarns includes a plurality of carbon nanotubes. The carbon nanotube yarns may be spirally wound around the axis of the body at zero pitch.

A conventional method of replacing copper wires with carbon nanotube wires in electrical transformers is disclosed by LUKASZ KURZEPA ET AL: "Replacing Copper Wires with Carbon Nanotube Wires in Electrical Transformers", ADVANCED FUNCTIONAL MATERIALS, WILEY - V C H VERLAG GMBH & CO. KGAA, DE, vol. 24, no. 5, 5 February 2014 (2014-02-05), pages 619-624. Therein, the individual CNT fibers are bundled to form a CNT cord which is later insulated with a non-conductive polymeric compound.

A conventional method of forming an insulating layer on the surface of CNT fibers is disclosed by LEKAWA-RAUS AGNIESZKA ET AL: "Towards the development of carbon nanotube based wires", CARBON, vol. 68, 1 March 2014 (2014-03-01), pages 597-609. More than two CNT fibers may be bundled to form CNT cords. To avoid compromising either the electrical or the mechanical performance of the CNT conductors, a polymer which has very high wetting angle on given assembly or very high viscosity is used.

JP 2015 079671 A describes a conductive wire comprising an insulator and a carbon nanotube introduced into a hollow part of the insulator. The carbon nanotubes are mixed in a solvent and injected, in the form of ink, into a metal tube within the insulator.

### Summary of Invention

### Technical Problem

It is an object of the present invention to provide a coated carbon nanotube electric wire that has excellent electroconductivity that is comparable to a wire made of copper, aluminum, or the like, realizes excellent voltage endurance, and can further realize weight reduction.

### Solution to Problem

In order to achieve the aforementioned object, there is provided a coated carbon nanotube electric wire according to the present invention as set out in claim 1. The coated carbon nanotube electric wire includes: a carbon nanotube wire including one or more carbon nanotube aggregates configured of a plurality of carbon nanotubes; and an insulating coating layer coating the carbon nanotube wire, in which a proportion of a sectional area of the insulating coating layer in a radial direction with respect to a sectional area of the carbon nanotube wire in the radial direction is greater than 1.5, the sectional area of the carbon nanotube wire in the radial direction is equal to or greater than 0.031 mm², and the sectional area of the insulating coating layer in the radial direction is equal to or greater than 0.049 mm².

The proportion of the sectional area of the insulating coating layer in the radial direction with respect to the sectional area of the carbon nanotube wire in the radial direction is equal to or greater than 1.7.

The proportion of the sectional area of the insulating coating layer in the radial direction with respect to the sectional area of the carbon nanotube wire in the radial direction is equal to or greater than 2.4.

The proportion of the sectional area of the insulating coating layer in the radial direction with respect to the sectional area of the carbon nanotube wire in the radial direction is equal to or less than 4.5.

The proportion of the sectional area of the insulating coating layer in the radial direction with respect to the sectional area of the carbon nanotube wire in the radial direction is equal to or greater than 1.7 and equal to or less than 4.5.

The proportion of the sectional area of the insulating coating layer in the radial direction with respect to the sectional area of the carbon nanotube wire in the radial direction is equal to or greater than 2.4 and equal to or less than 4.5.

The sectional area of the carbon nanotube wire in the radial direction is equal to or greater than 6.0 mm².

A proportion of a Young's modulus of a material configuring the insulating coating layer with respect to a Young's modulus of the carbon nanotube wire is equal to or greater than 0.00001 and equal to or less than 0.5.

Also, the proportion of the Young's modulus of the material configuring the insulating coating layer with respect to the Young's modulus of the carbon nanotube wire is equal to or greater than 0.0005 and equal to or less than 0.1.

The carbon nanotube wire includes a plurality of the carbon nanotube aggregates, and a full-width at half maximum Δθ in azimuth angle in azimuth plot based on small-angle X-ray scattering indicating an orientation of the plurality of the carbon nanotube aggregates is equal to or less than 60°.

A q value of a peak top at a (10) peak of scattering intensity based on X-ray scattering indicating density of the plurality of carbon nanotubes is equal to or greater than 2.0 nm⁻¹ and equal to or less than 5.0 nm⁻¹, and a full-width at half maximum Δq is equal to or greater than 0.1 nm⁻¹ and equal to or less than 2.0 nm⁻¹.

A thickness deviation rate of the insulating coating layer is preferably equal to or greater than 50%.

Also, a thickness deviation rate of the insulating coating layer is preferably equal to or greater than 70%.

### Effects of Invention

The carbon nanotube wire using carbon nanotubes as a core wire has anisotropic heat conduction, and heat is transmitted with higher priority in a longitudinal direction than in a radial direction, unlike a core wire made of metal. In other words, since the carbon nanotube wire has anisotropic heat dissipation ability, the carbon nanotube wire has more excellent heat dissipation ability as compared with the core wire made of metal. Therefore, it is necessary to employ design of an insulating coating layer coating the core wire using the carbon nanotubes, which is different from design of an insulating coating layer coating the core wire made of metal. According to the present invention, since the proportion of the sectional area of the insulating coating layer in the radial direction with respect to the sectional area of the carbon nanotube wire in the radial direction is greater than 1.5, the sectional area of the carbon nanotube wire in the radial direction is equal to or greater than 0.031 mm², and the sectional area of the insulating coating layer in the radial direction is equal to or greater than 0.049 mm², it is possible to obtain excellent voltage endurance with the thick insulating coating layer, further to realize excellent electroconductivity that is comparable to a wire made of copper, aluminum, or the like, and to realize weight reduction as compared with an electric wire coated with metal such as copper, aluminum, or the like.

Also, by the proportion of the Young's modulus of the material configuring the insulating coating layer with respect to the Young's modulus of the carbon nanotube wire being equal to or greater than 0.00001 and equal to or less than 0.5, it is possible to reliably prevent occurrence of peeling-off of the insulating coating layer from the carbon nanotube wire and cracking in the insulating coating layer even if the coated carbon nanotube electric wire is repeatedly bent. By the proportion of the Young's modulus of the material configuring the insulating coating layer with respect to the Young's modulus of the carbon nanotube wire being equal to or greater than 0.0005 and equal to or less than 0.1, in particular, it is possible to reliably prevent occurrence of peeling-off of the insulating coating layer from the carbon nanotube wire and cracking in the insulating coating layer in the coated carbon nanotube electric wire for a high voltage (for a large current).

Also, by the full-width at half maximum Δθ in azimuth angle in azimuth plot based on small-angle X-ray scattering of the carbon nanotube aggregates in the carbon nanotube wire being equal to or less than 60°, the carbon nanotube aggregates have a high orientation in the carbon nanotube wire, and heat dissipation ability of the carbon nanotube wire is thus further improved.

Moreover, by the q value of the peak top at the (10) peak of scattering intensity based on X-ray scattering of the carbon nanotubes being equal to or greater than 2.0 nm⁻¹ and equal to or less than 5.0 nm⁻¹, and the full-width at half maximum Δq being equal to or greater than 0.1 nm⁻¹ and equal to or less than 2.0 nm⁻¹, the carbon nanotubes can be present with high density, and heat dissipation ability of the carbon nanotube wire is thus further improved.

Further, by the thickness deviation rate of the insulating coating layer being equal to or greater than 50%, the insulating coating layer has a thick thickness, the thickness is uniformized, and it is possible to curb occurrence of insulation breakage when a high voltage is applied, for example, and to further improve an insulation property. Also, it is possible to improve abrasion resistance of the coated carbon nanotube electric wire. Further, by the thickness deviation rate of the insulating coating layer being equal to or greater than 70%, a more uniform insulating coating layer is formed, the coated carbon nanotube electric wire is unlikely to be bent in relation to the longitudinal direction, and it is possible to easily arrange the coated carbon nanotube electric wire when an electric wire path is formed in a space, a ground, a building, a facility, or an apparatus and to achieve both an excellent insulation property and excellent handling ability.

### Brief Description of the Drawings

[Fig. 1] An explanatory diagram of a coated carbon nanotube electric wire according to an embodiment of the present invention.
[Fig. 2] An explanatory diagram of a carbon nanotube wire used in the coated carbon nanotube electric wire according to the embodiment of the present invention.
[Fig. 3] Fig. 3(a) is a diagram illustrating an example of a two-dimensional scattering image of scattering vectors q of a plurality of carbon nanotube aggregates obtained through SAXS, and Fig. 3(b) is a graph illustrating an example of azimuth angle-scattering intensity of an arbitrary scattering vector q that has an origin at a position of a transmitted X ray in the two-dimensional scattering image.
[Fig. 4] A graph illustrating a relationship of a q value-intensity obtained through WAXS of a plurality of carbon nanotubes that configure the carbon nanotube aggregates.

### Description of Embodiments

Hereinafter, a coated carbon nanotube electric wire according to an embodiment of the present invention will be described with reference to drawings.

### [Configuration of coated carbon nanotube electric wire]

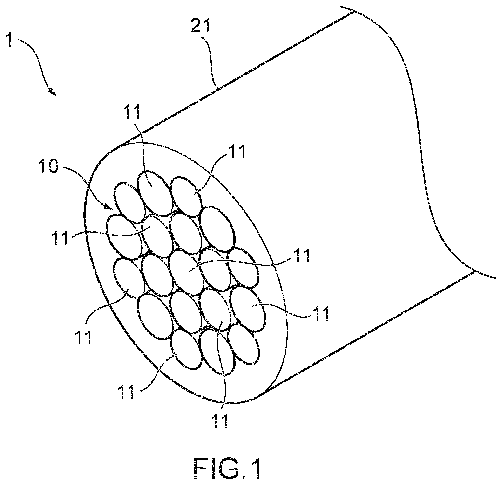

As illustrated in Fig. 1, a coated carbon nanotube electric wire 1 according to an embodiment of the present invention (hereinafter, also referred to as a "coated CNT electric wire") has a configuration in which a peripheral surface of a carbon nanotube wire (hereinafter, also referred to as a "CNT wire") 10 is coated with an insulating coating layer 21. In other words, the CNT wire 10 is coated with the insulating coating layer 21 along the longitudinal direction. In the coated CNT electric wire 1, the entire peripheral surface of the CNT wire 10 is coated with the insulating coating layer 21. Also, the insulating coating layer 21 is in the form in which the insulating coating layer 21 directly contacts with the peripheral surface of the CNT wire 10 in the coated CNT electric wire 1. Although the CNT wire 10 is a strand (single-stranded wire) made of one CNT wire 10 in Fig. 1, the CNT wire 10 may be in a state of twisted wire in which a plurality of CNT wires 10 are twisted. It is possible to appropriately adjust an equivalent circle diameter and a sectional area of the CNT wire 10 by employing a form of the twisted wire for the CNT wire 10.

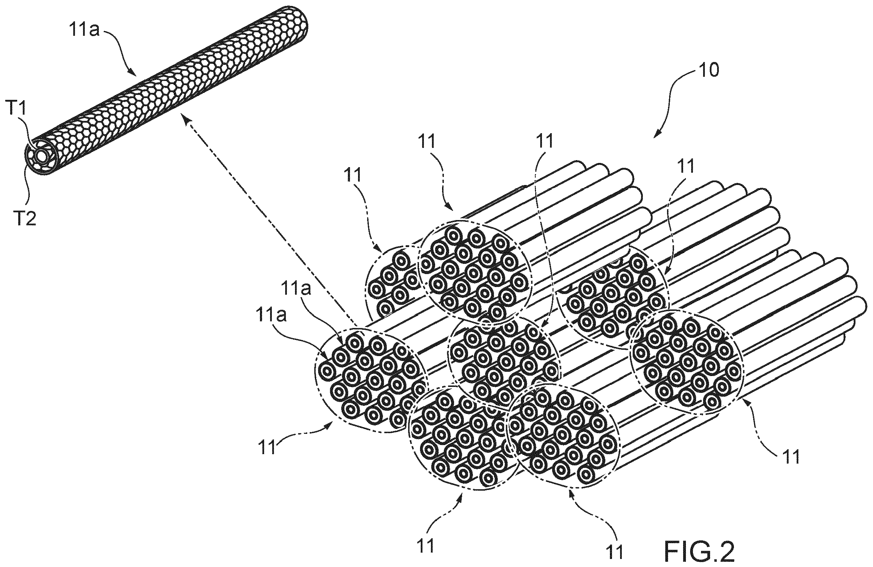

As illustrated in Fig. 2, the CNT wire 10 is formed of a single carbon nanotube aggregate (hereinafter, also referred to as a "CNT aggregate") 11 or a plurality of bundled carbon nanotube aggregates 11 configured of a plurality of CNTs 11a, 11a, ... that have a layer structure of one or more layers. Here, the CNT wires mean CNT wires in which a proportion of CNTs is equal to or greater than 90% by mass. Note that masses of plating and dopant are excluded from calculation of the CNT proportion in the CNT wires. In Fig. 2, the CNT wire 10 has a configuration in which a plurality of CNT aggregates 11 are bundled. The longitudinal direction of the CNT aggregates 11 forms the longitudinal direction of the CNT wire 10. Thus, the CNT aggregates 11 have a linear shape. The plurality of CNT aggregates 11, 11, ... in the CNT wire 10 are disposed such that the long axis directions thereof are substantially aligned. Therefore, the plurality of CNT aggregates 11, 11, ... in the CNT wire 10 are oriented. Although the equivalent circle diameter of the CNT wire 10 that is a strand is not particularly limited, the equivalent circle diameter is equal to or greater than 0.01 mm and equal to or less than 4.0 mm, for example. Also, the equivalent circle diameter of one CNT wire 10 that is a twisted wire is not particularly limited, the equivalent circle diameter is equal to or greater than 0.1 mm and equal to or less than 15 mm, for example. The CNT wire 10 in the form of a twisted wire is also referred to as a CNT wire, and an upper limit of the sectional area in this case is not limited.

The CNT aggregates 11 are bundles of CNTs 11a that have a layer structure of one or more layers. The longitudinal direction of the CNTs 11a forms a longitudinal direction of the CNT aggregates 11. The plurality of CNTs 11a, 11a, ... in the CNT aggregates 11 are disposed such that the long axis directions thereof are substantially aligned. Therefore, the plurality of CNTs 11a, 11a, ... in the CNT aggregates 11 are oriented. The equivalent circle diameter of the CNT aggregates 11 is equal to or greater than 20 nm and equal to or less than 1000 nm, for example, and is more typically equal to or greater than 20 nm and equal to or less than 80 nm. The width dimension of the outermost layer of the CNTs 11a is equal to or greater than 1.0 nm and equal to or less than 5.0 nm, for example.

Each of the CNTs 11a configuring the CNT aggregates 11 is a tubular element that has a single-layer structure or a multiple-layer structure and is referred to as a single-walled nanotube (SWNT) or a multi-walled nanotube (MWNT). Although only the CNTs 11a that have a two-layer structure are illustrated in Fig. 2 for convenience, the CNT aggregates 11 may include CNTs that have a layer structure of a three or more layers or CNTs that have a layer structure of a single layer, or the CNT aggregates 11 may be formed of the CNTs that have a layer structure of three or more layers or the CNTs that have a layer structure of a single layer.

Each CNT 11a that has a two-layer structure has a three-dimensional mesh structure element in which two tubular elements T1 and T2 that have a mesh structure of hexagonal lattices are substantially coaxially disposed and is called a double-walled nanotube (DWNT). Each hexagonal lattice that is a configuration unit is a six-membered ring with carbon atoms disposed at apexes thereof and is adjacent to other six-membered rings, and these are successively coupled to each other.

Characteristics of the CNTs 11a depend on chirality of the aforementioned tubular elements. Chirality is roughly classified into an armchair type, a zigzag type, and a chiral type, the armchair type exhibits metallic behaviors, the zigzag type exhibits semiconducting and semi-metallic behaviors, and the chiral type exhibits semiconducting and semi-metallic behaviors. Thus, the electroconductivity of the CNTs 11a significantly differs depending on which of chirality the tubular elements have. In order to further improve electroconductivity, it is preferable to increase the proportion of the armchair-type CNTs 11a that exhibit metallic behaviors in the CNT aggregates 11 that configure the CNT wire 10 of the coated CNT electric wire 1.

On the other hand, it is known that the chiral-type CNTs 11a exhibit metallic behaviors by doping the chiral-type CNTs 11a that exhibit semiconducting behaviors with a substance (a different kind of element) with electron donating properties or electron receiving properties. Also, electroconductivity decreases due to occurrence of scattering of conductive electrons inside typical metal by doping the metal with a different kind of element. Similarly, doping the CNTs 11a that exhibit metallic behaviors with a different kind of element leads to a decrease in electroconductivity.

In this manner, an effect of doping of the CNTs 11a that exhibit metallic behaviors and the CNTs 11a that exhibit semiconducting behaviors has a tradeoff relationship in terms of electroconductivity. Thus, it is theoretically desirable to separately produce the CNTs 11a that exhibit metallic behaviors and the CNTs 11a that exhibit semiconducting behaviors, perform doping processing only on the CNTs 11a that exhibit semiconducting behaviors, and then combine these. However, it is difficult to selectively produce the CNTs 11a that exhibit metallic behaviors and the CNTs 11a that exhibit semiconducting behaviors in a distinguished manner by current manufacturing technologies, and the CNTs 11a that exhibit metallic behaviors and the CNTs 11a that exhibit semiconducting behaviors are produced in a mixed state. Thus, in order to further improve electroconductivity of the CNT wire 10 including a mixture of the CNTs 11a that exhibit metallic behaviors and the CNTs 11a that exhibit semiconducting behaviors, it is preferable to select such a layer structure for the CNTs 11a that makes the doping processing using a different kind of element/molecule effective.

For example, a CNT with a small number of layers, such as a two-layer structure or a three-layer structure, has relatively higher electroconductivity than that of a CNT with a larger number of layers, and the highest doping effect can be achieved in the CNT with the two-layer structure or the three-layer structure when doping processing is performed. Therefore, it is preferable to increase the proportion of CNTs with a two-layer structure or a three-layer structure in order to further improve electroconductivity of the CNT wire 10. Specifically, the proportion of the CNTs with a two-layer structure or a three-layer structure with respect to all the CNTs is preferably equal to or greater than 50% by number and is more preferably equal to or greater than 75% by number. The proportion of CNTs with a two-layer structure or a three-layer structure can be calculated by observing and analyzing the section of the CNT aggregates 11 using a transmission electron microscope (TEM), selecting a predetermined number of arbitrary CNTs such that the number falls within a range of 100, and measuring the number of layers in each of the CNTs.

Next, orientations of the CNTs 11a and the CNT aggregates 11 in the CNT wire 10 will be described.

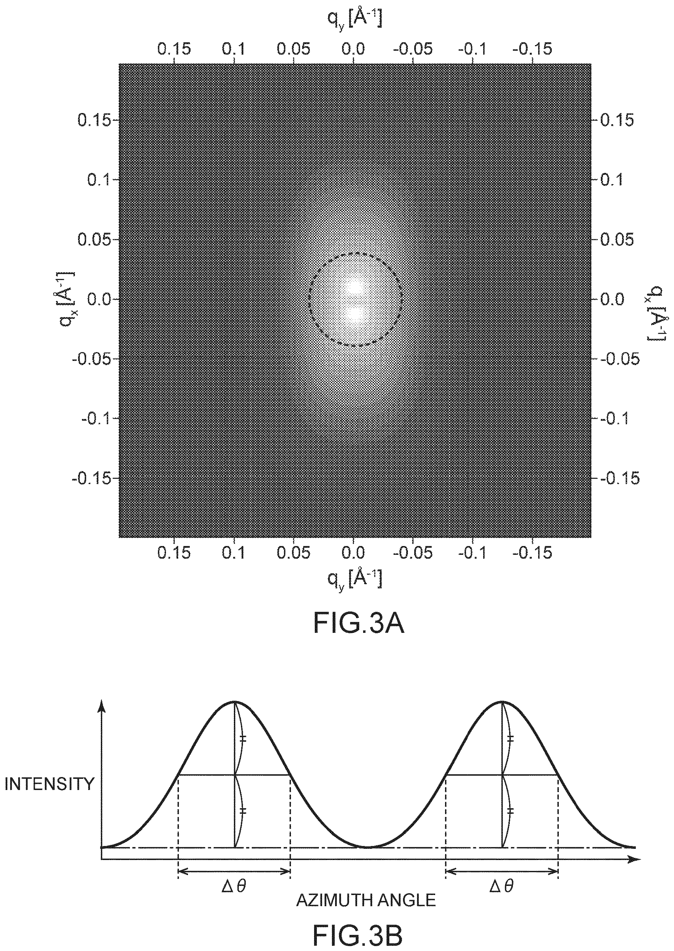

Fig. 3(a) is a diagram illustrating an example of a two-dimensional scattering image of scattering vectors q of the plurality of CNT aggregates 11, 11, ... based on small-angle X-ray scattering (SAXS), and Fig. 3(b) is a graph illustrating an example of azimuth plot illustrating a relationship of azimuth angle-scattering intensity of an arbitrary scattering vector q using a position of a transmitted X ray as an origin in a two-dimensional scattering image.

The SAXS is suitable for evaluating a structure and the like of a size of several nm to several tens of nm. For example, it is possible to evaluate orientations of the CNTs 11a with outer diameters of several nm and the CNT aggregates 11 with outer diameters of several tens of nm by analyzing information of an X-ray scattering image by the following method using the SAXS. If an X-ray scattering image of the CNT wire 10 is analyzed, for example, q_{y} that is a y component is more narrowly distributed than qₓ that is an x component of the scattering vector q (q = 2π/d: d is a lattice surface interval) of the CNT aggregates 11 as illustrated in Fig. 3(a). Also, as a result of analyzing the azimuth plot of SAXS for the same CNT wire 10 as that in Fig. 3(a), the full-width at half maximum Δθ in azimuth angle in azimuth plot illustrated in Fig. 3(b) is 48°. It is possible to state, on the basis of these analysis results, that the plurality of CNTs 11a, 11a, ... and the plurality of CNT aggregates 11, 11, ... have satisfactory orientations in the CNT wire 10. In this manner, since the plurality of CNTs 11a, 11a, ... and the plurality of CNT aggregates 11, 11, ... have satisfactory orientations, the heat of the CNT wire 10 is more likely to be discharged while smoothly delivered along the longitudinal direction of the CNTs 11a and the CNT aggregates 11. Thus, since it is possible to adjust a heat dissipation route in the longitudinal direction and in the radial sectional direction by adjusting the aforementioned orientations of the CNTs 11a and the CNT aggregates 11, the CNT wire 10 exhibits more excellent heat dissipation ability as compared with the core wire made of metal. Note that the orientations indicate angular differences of vectors of the CNTs and the CNT aggregates inside with respect to a vector V of the twisted wire produced by twisting the CNTs together in the longitudinal direction.

The full-width at half maximum Δθ in azimuth angle in azimuth plot based on small-angle X-ray scattering (SAXS) indicating an orientation of the plurality of carbon nanotube aggregates 11, 11, ... is preferably equal to or less than 60° and is particularly preferably equal to or less than 50° in order to further improve heat dissipation ability of the CNT wire 10 by obtaining an orientation, which is represented by the full-width at half maximum Δθ in azimuth angle, in a specific level or higher.

Next, an alignment structure and density of the plurality of CNTs 11a configuring the CNT aggregates 11 will be described.

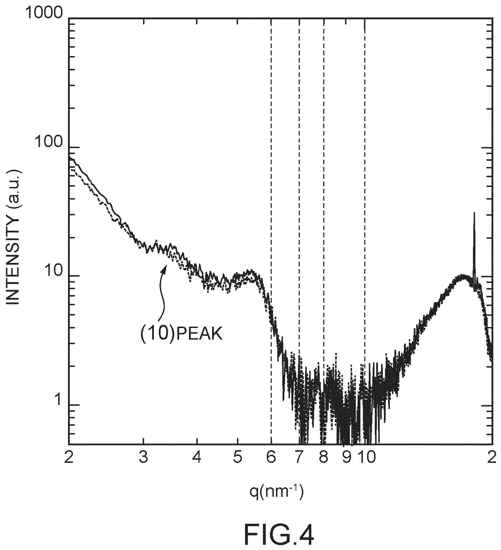

Fig. 4 is a graph illustrating a relationship of a q value-intensity in wide-angle X-ray scattering (WAXS) of the plurality of CNTs 11a, 11a, ... configuring the CNT aggregates 11.

The WAXS is suitable for evaluating a structure and the like of a material with a size of equal to or less than several nm. For example, it is possible to evaluate density of the CNTs 11a with outer diameters of equal to or less than several nm by analyzing information of an X-ray scattering image by the following method using the WAXS. As a result of analyzing a relationship between a scattering vector q and intensity for an arbitrary one CNT aggregate 11, a value of a lattice constant estimated from the q value of the peak top at the (10) peak observed near q = 3.0 nm⁻¹ to 4.0 nm⁻¹ is measured as illustrated in Fig. 4. It is possible to confirm that the CNTs 11a, 11a, ... form hexagonal closest-packing structure in a plan view, on the basis of the measurement value of the lattice constant and the diameter of the CNT aggregate observed by Raman spectroscopy, a TEM, or the like. Therefore, it is possible to state that diameter distribution of the plurality of CNT aggregates in the CNT wire 10 is narrow, and the plurality of CNTs 11a, 11a, ... are aligned with regularity, that is, with high density, thus form a hexagonal closest-packing structure, and are present with high density.

Since the plurality of CNT aggregates 11, 11, ... have satisfactory orientations and further the plurality of CNTs 11a, 11a, ... that configure the CNT aggregates 11 are aligned with regularity and are disposed with high density as described above, the heat from the CNT wire 10 is likely to be discharged while smoothly delivered along the longitudinal direction of the CNT aggregates 11. Therefore, since it is possible to adjust the heat dissipation route in the longitudinal direction and the radial sectional direction by adjusting the alignment structures and the density of the CNT aggregates 11 and the CNTs 11a, the CNT wire 10 exhibits more excellent heat dissipation ability as compared with the core wire made of metal.

The q value of the peak top at the (10) peak of the intensity based on the X-ray scattering indicating density of the plurality of CNTs 11a, 11a, ... is preferably equal to or greater than 2.0 nm⁻¹ and equal to or less than 5.0 nm⁻¹, and the full-width at half maximum Δq (FWHM) is preferably equal to or greater than 0.1 nm⁻¹ and equal to or less than 2.0 nm⁻¹ in order to further improve heat dissipation ability by obtaining high density.

The orientations of the CNT aggregates 11 and the CNTs 11a and the alignment structure and the density of the CNTs 11a can be adjusted by appropriately selecting a spinning method such as dry spinning, wet spinning, or liquid crystal spinning and spinning conditions for the spinning method, which will be described later.

Next, the insulating coating layer 21 coating the peripheral surface of the CNT wire 10 will be described.

As a material of the insulating coating layer 21, a material that is used for an insulating coating layer of a coated electric wire using metal in a core wire can be used, and examples thereof include a thermoplastic resin and a thermosetting resin. Examples of the thermoplastic resin include polytetrafluoroethylene (PTFE) (Young's modulus: 0.4 GPa), polyethylene (Young's modulus: 0.1 to 1.0 GPa), polypropylene (Young's modulus: 1.1 to 1.4 GPa), polyacetal (Young's modulus: 2.8 GPa), polystyrene (Young's modulus: 2.8 to 3.5 GPa), polycarbonate (Young's modulus: 2.5 GPa), polyamide (Young's modulus: 1.1 to 2.9 GPa), polyvinyl chloride (Young's modulus: 2.5 to 4.2 GPa), polymethyl methacrylate (Young's modulus: 3.2 GPa), polyurethane (Young's modulus: 0.07 to 0.7 GPa), and the like. Also, examples of the thermosetting resin include polyimide (2.1 to 2.8 GPa), a phenol resin (5.2 to 7.0 GPa), and the like. One of these may be used alone, or two or more of these may appropriately be mixed and used. Although the Young's modulus of the material configuring the insulating coating layer 21 is not particularly limited, the Young's modulus is preferably equal to or greater than 0.07 GPa and equal to or less than 7 GPa and is particularly preferably equal to or greater than 0.07 GPa and equal to or less than 4 GPa, for example.

The coated CNT electric wire 1 is preferably a high-voltage electric wire, and in a case of a high-voltage electric wire, the thermoplastic resin is preferably polyethylene or polyvinyl chloride and is particularly preferably crosslinked polyethylene or plasticized polyvinyl chloride.

The insulating coating layer 21 may include one layer as illustrated in Fig. 1 or may include two or more layers instead. Also, a thermosetting resin layer may further be provided on the insulating coating layer 21 as needed. In addition, the aforementioned thermosetting resin may contain a filler that has a fiber form or a particle form.

In the coated CNT electric wire 1, the proportion of the sectional area of the insulating coating layer 21 in the radial direction with respect to the sectional area of the CNT wire 10 in the radial direction is greater than 1.5. By the proportion of the sectional areas being greater than 1.5, it is possible to increase the thickness of the insulating coating layer 21, and it is thus possible to sufficiently secure insulation reliability and to obtain excellent heat dissipation ability with respect to the heat of the CNT wire 10. Also, the coated CNT electric wire 1 has the CNT wire 10 with a lighter weight as compared with a core wire made of copper, aluminum, or the like and can thus realize weight reduction as compared with an electric wire coated with metal such as copper, aluminum, or the like even though the thick insulating coating layer is formed thereon.

Although there is a case in which it is difficult to maintain the shape in the longitudinal direction only with the CNT wire 10 alone, the coated CNT electric wire 1 can maintain the shape in the longitudinal direction since the peripheral surface of the CNT wire 10 is coated with the insulating coating layer 21 at the aforementioned proportion of the sectional area. Therefore, it is possible to enhance handling ability when the coated CNT electric wire 1 is arranged.

Further, since minute unevenness is formed on the peripheral surface of the CNT wire 10, adhesiveness between the CNT wire 10 and the insulating coating layer 21 is improved, and it is possible to curb peeling-off between the CNT wire 10 and the insulating coating layer 21, as compared with a coated electric wire using a core wire made of aluminum or copper.

Although the proportion of the sectional areas is not particularly limited as long as the proportion falls within a range of greater than 1.5, the proportion is preferably equal to or greater than 1.7 in order to improve insulation reliability. Also, the proportion of the sectional areas is more preferably equal to or greater than 2.4 in order to improve voltage endurance and handling ability. Also, the proportion of the sectional areas is preferably equal to or less than 4.5 in order to improve heat dissipation ability. Thus, the proportion of the sectional areas is preferably equal to or greater than 1.7 and equal to or less than 4.5 in order to improve heat dissipation ability and insulation reliability with satisfactory balance and is particularly preferably equal to or greater than 2.4 and equal to or less than 4.5 in order to improve heat dissipation ability, voltage endurance, insulation reliability, and handling ability with satisfactory balance.

In a case in which the proportion of the sectional areas is within the range of greater than 1.5, the sectional area of the CNT wire 10 in the radial direction is equal to or greater than 0.031 mm² and is particularly preferably equal to or greater than 6.0 mm². Also, the sectional area of the insulating coating layer 21 in the radial direction is equal to or greater than 0.049 mm² and is further preferably within a range of greater than 9.0 mm² in terms of a balance between voltage endurance and heat dissipation ability. The sectional areas can be measured from a scanning electron microscope (SEM) observation image, for example. Specifically, an SEM image (100 times to 10,000 times) of a section of the coated CNT electric wire 1 in the radial direction is obtained, then an area obtained by subtracting an area of the material of the insulating coating layer 21 that has entered the inside of the CNT wire 10 from an area of a portion surrounded by the outer periphery of the CNT wire 10 and a total of an area of the portion of the insulating coating layer 21 coating the outer periphery of the CNT wire 10 and an area of the material of the insulating coating layer 21 that has entered the inside of the CNT wire 10 are defined as a sectional area of the CNT wire 10 in the radial direction and a sectional area of the insulating coating layer 21 in the radial direction, respectively. The sectional area of the insulating coating layer 21 in the radial direction includes a resin that has entered the interspace of the CNT wire 10.

The Young's modulus of the CNTs is higher than the Young's modulus of aluminum or copper used in a core wire in the related art. While the Young's modulus of aluminum is 70.3 GPa and the Young's modulus of copper is 129.8 GPa, the Young's modulus of the CNTs is 300 to 1500 GPa, which is a value of more than about double. Thus, since it is possible to use a material with a high Young's modulus (for example, a thermoplastic resin with a high Young's modulus) as the material of the insulating coating layer 21 in the coated CNT electric wire 1 as compared with the coated electric wire using aluminum or copper in the core wire and thereby to provide excellent abrasion resistance to the insulating coating layer 21 of the coated CNT electric wire 1, and the coated CNT electric wire 1 exhibits excellent durability.

The Young's modulus of the CNTs is higher than the Young's modulus of aluminum or copper used in the core wire in the related art as described above. Therefore, the proportion of the Young's modulus of the material configuring the insulating coating layer with respect to the Young's modulus of the core wire in the coated CNT electric wire 1 is smaller than the proportion of the Young's modulus of the coated electric wire using aluminum or copper in the core wire. Therefore, it is possible to curb peeling-off between the CNT wire 10 and the insulating coating layer 21 and cracking of the insulating coating layer 21 even if the coated CNT electric wire 1 is repeatedly bent, as compared with the coated electric wire using aluminum or copper in the core wire.

Although the proportion of the Young's modulus of the material configuring the insulating coating layer 21 with respect to the Young's modulus of the CNT wire 10 is not particularly limited, a lower limit value of the proportion of the Young's moduli is preferably 0.00001 in order to make the insulating coating layer 21 follow the CNT wire 10 and to prevent the insulating coating layer 21 from peeling off from the CNT wire 10 even if the coated CNT electric wire 1 is repeatedly bent, and is more preferably 0.0005 and is particularly preferably 0.001 in order to prevent the insulating coating layer 21 from peeling off from the CNT wire 10 even if the coated CNT electric wire 1 is bent over a long period of time. On the other hand, an upper limit value of the proportion of the Young's moduli is preferably 0.5 in order to prevent cracking from occurring in the insulating coating layer 21 even if the coated CNT electric wire 1 is repeatedly bent, and is more preferably 0.1, is further preferably 0.01, and is particularly preferably 0.005 in order to prevent cracking from occurring in the insulating coating layer 21 even if the coated CNT electric wire 1 is bent over a long period of time.

The Young's modulus of the CNT wire 10 and the Young's modulus of the material configuring the insulating coating layer 21 can be measured by, for example, performing a tensile test by a method in accordance with JIS K7161-1.

The thickness of the insulating coating layer 21 in a direction that perpendicularly intersects the longitudinal direction (that is, radial direction) is preferably uniformized in order to improve voltage endurance and insulation reliability of the coated CNT electric wire 1. Specifically, the thickness deviation rate of the insulating coating layer 21 is preferably equal to or greater than 50% in order to further improve voltage endurance and insulation reliability, for example, and is particularly preferably equal to or greater than 70% in order to improve handling ability in addition to the voltage endurance and insulation reliability. Note that the "thickness deviation rate" in this specification means a value obtained by calculating α = (a minimum value of the thickness of the insulating coating layer 21/a maximum value of the thickness of the insulating coating layer 21) × 100 (%) for each of sections in the radial direction at every 10 cm in arbitrary 1.0 m of the coated CNT electric wire 1 on the center side in the longitudinal direction and averaging the α values calculated at the sections. Also, the thickness of the insulating coating layer 21 can be measured from an SEM image by circularly approximating the CNT wire 10, for example. Here, the center side in the longitudinal direction indicates a region located at the center when seen in the longitudinal direction of the wire.

The thickness deviation rate of the insulating coating layer 21 can be improved by adjusting a tensile force applied to the CNT wire 10 in the longitudinal direction when the CNT wire 10 is caused to pass through a die in an extrusion process in a case in which the insulating coating layer 21 is formed at the peripheral surface of the CNT wire 10 through extrusion coating, for example.

### [Method for manufacturing coated carbon nanotube electric wire]

Next, an example of a method for manufacturing the coated CNT electric wire 1 according to the embodiment of the present invention will be described. The coated CNT electric wire 1 can be manufactured by manufacturing the CNTs 11a first, forming the CNT wire 10 from the plurality of obtained CNTs 11a, and coating the peripheral surface of the CNT wire 10 with the insulating coating layer 21.

The CNTs 11a can be produced by a method such as a floating catalyst method (Japanese Patent No. 5819888) or a substrate method (Japanese Patent No. 5590603). The strand of the CNT wire 10 can be produced by, for example, dry spinning (Japanese Patent No. 5819888, Japanese Patent No. 5990202, and Japanese Patent No. 5350635), wet spinning (Japanese Patent No. 5135620, Japanese Patent No. 5131571, and Japanese Patent No. 5288359), liquid crystal spinning (National Publication of International Patent Application No. 2014-530964), or the like.

At this time, the orientation of the CNTs 11a configuring the CNT wire 10, the orientation of the CNTs 11a configuring the CNT aggregates 11, or the density of the CNT aggregates 11 and the CNTs 11a can be adjusted by appropriately selecting a spinning method such as dry spinning, wet spinning, or liquid crystal spinning, for example, and spinning conditions for the spinning method.

As a method for coating the peripheral surface of the CNT wire 10 obtained as described above with the insulating coating layer 21, a method of coating a core wire made of aluminum or copper with the insulating coating layer can be used, and for example, it is possible to exemplify a method of melting a thermoplastic resin that is a raw material of the insulating coating layer 21 and extruding the thermoplastic resin to the circumference of the CNT wire 10 to coat the CNT wire 10 with the thermoplastic resin or a method of applying a molten thermoplastic resin to the circumference of the CNT wire 10.

The coated CNT electric wire 1 according to the embodiment of the present invention can be used as a general electric wire such as a wire harness, or a cable may be produced from the general electric wire using the coated CNT electric wire 1.

### Examples

Although examples of the present invention will be described below, the present invention is not limited to the following examples unless modifications otherwise depart from the gist of the present invention.

### (Concerning Examples 1 to 12 and Comparative Examples 1 to 6)

### Concerning method for manufacturing CNT wire

First, strand (single-stranded wires) of CNT wires with equivalent circle diameters of 0.2 mm were obtained by a dry spinning method (Japanese Patent No. 5819888) of directly spinning CNTs produced by the floating catalyst method or a method of wet-spinning the CNTs (Japanese Patent No. 5135620, Japanese Patent No. 5131571, and Japanese Patent No. 5288359). Also, CNT wires with equivalent circle diameters of greater than 0.2 mm were obtained by adjusting the number of CNT wires with an equivalent circle diameter of 0.2 mm and appropriately twisting the CNT wires together, thereby obtaining twisted wires.

### Concerning method for coating peripheral surface of CNT wire with insulating coating layer

Insulating coating layers were formed by extruding any of the following resins to the circumferences of conductive elements and coating the circumferences with the resins using an ordinary extruding and molding machine for manufacturing an electric wire, thereby producing coated CNT electric wires used in examples and comparative examples in Table 1 shown below.
- Polyethylene (manufactured by Japan Polyethylene Corporation, product name: "Novatec LL")
- Polyvinyl chloride (manufactured by Shindai-ichi Vinyl Corporation, product name: "ZEST1300Z")

### (a) Measurement of sectional area of CNT wire

A section of each CNT wire in the radial direction was cut using an ion milling device (IM4000 manufactured by Hitachi High-Tech Corporation), and the sectional area of each CNT wire in the radial direction was then measured from an SEM image obtained by a scanning electron microscope (SU8020 manufactured by Hitachi High-Tech Corporation, magnification: 100 times to 10,000 times). Similar measurement was repeated at every 10 cm from arbitrary 1.0 m of the coated CNT electric wire on the center side in the longitudinal direction, and an average value thereof was defined as a sectional area of the CNT wire in the radial direction. Note that the resin that entered the inside of the CNT wire was not included in the sectional area of the CNT wire.

### (b) Measurement of sectional area of insulating coating layer

A section of each CNT wire in the radial direction was cut using an ion milling device (IM4000 manufactured by Hitachi High-Tech Corporation), and the sectional area of the insulating coating layer in the radial direction was then measured from an SEM image obtained by a scanning electron microscope (SU8020 manufactured by Hitachi High-Tech Corporation, magnification: 100 times to 10,000 times). Similar measurement was repeated at every 10 cm from arbitrary 1.0 m of the coated CNT electric wire on the center side in the longitudinal direction, and an average value thereof was defined as a sectional area of the insulating coating layer in the radial direction. Therefore, the resin that entered the inside of the CNT wire was included as a sectional area of the insulating coating layer in the measurement.

### (c) Measurement of full-width at half maximum Δθ in azimuth angle based on SAXS

Small-angle X-ray scattering measurement was performed using a small-angle X-ray scattering device (Aichi Synchrotron), and full-widths at half maximum Δθ in azimuth angle were obtained from the obtained azimuth plots.

### (d) Measurement of q value of peak top and full-width at half maximum Δq in azimuth angle based on WAXS

Wide-angle X-ray scattering measurement was performed using a wide-angle X-ray scattering device (Aichi Synchrotron), and q values of the peak tops at (10) peaks of intensity and full-widths at half maximum Δq were obtained from obtained q-value-intensity graphs.

### (e) Measurement of Thickness deviation rate

The coated CNT electric wire was cut at every 10 cm from arbitrary 1.0 m of the coated CNT electric wire on the center side in the longitudinal direction, and thicknesses of the insulating coating layer at the sections in the radial direction were measured. In each of the sections, a value of α = (a minimum value of the thickness of the insulating coating layer/a maximum value of the thickness of the insulating coating layer) × 100 was calculated. A value obtained by averaging the α values calculated in the sections was defined as each thickness deviation rate. Also, the thickness of the insulating coating layer was able to be measured from an SEM image as a shortest distance from an interference of a circularly approximated CNT wire 10 and the insulating coating layer 21, for example.

### (f) Young's modulus of material configuring insulating coating layer/Young's modulus of CNT wire

The insulating coating layer was made to peel from each 1.0 m coated CNT electric wire. Five 5 cm test pieces were collected at every 20 cm in the longitudinal direction from each of the peeled insulating coating layer and the CNT wire. A tensile test was conducted by a method in accordance with JIS K 7161-1, and the Young's modulus of each test piece was obtained. A proportion of the Young's modulus of the material configuring the insulating coating layer with respect to the Young's modulus of the CNT wire was calculated on the basis of a value obtained by averaging the Young's moduli of the five test pieces of each insulating coating layer and a value obtained by averaging the Young's moduli of the five test pieces of each CNT wire.

Results of the aforementioned measurement for the coated CNT electric wires are shown in Table 1 below. Note that in Table 1, the proportion of the sectional area of the insulating coating layer in the radial direction with respect to the sectional area of the CNT wire in the radial direction is simply described as a "proportion of sectional areas", and the proportion of the Young's modulus of the material configuring the insulating coating layer with respect to the Young's modulus of the CNT wire is simply described as a "proportion of Young's moduli".

The coated CNT electric wires produced as described above were evaluated as follows.

### (1) Heat dissipation ability

Four terminals were connected to both ends of a 100 cm coated CNT electric wire, and resistance was measured by a four-terminal method. At this time, an applied current was set to 2000 A/cm², and a temporal change in resistance value was recorded. Resistance values at the time of starting the measurement and after elapse of 10 minutes were compared, and an increase rate was calculated. Since the resistance of the coated CNT electric wire increases in proportion to a temperature, it is possible to determine that the coated CNT electric wire with a smaller rate of increase in resistance has more excellent heat dissipation ability. A rate of increase in resistance of less than 15% was evaluated as being satisfactory "∘", a rate of increase in resistance of equal to or greater than 15% and less than 30% was evaluated as being substantially satisfactory "Δ", and a rate of increase in resistance of equal to or greater than 30% was evaluated as being inferior "×".

However, since different conductive elements have different coefficients of correlation between a temperature and an increase in resistance, it is not possible to compare the coated CNT electric wire and a metal electric wire using this evaluation method. Therefore, heat dissipation ability was not evaluated for the Al electric wire and the Cu electric wire.

### (2) Durability in bending

By a method in accordance with IEC60227-2, a 100 cm coated CNT electric wire was bent at 90 degrees 1000 times in a state in which a load of 500 gf was applied thereto. Thereafter, section observation was performed at every 10 cm of the coated CNT electric wire in the longitudinal direction, and whether or not there was peeling between the coated CNT electric wire and the insulating coating layer was checked. A coated CNT electric wire with no peeling was evaluated as being satisfactory "O", a coated CNT electric wire that partially peeled in an allowable level of product quality was evaluated as being substantially satisfactory "Δ", and a coated CNT electric wire with the CNT wire disconnected was evaluated as being inferior "×".

### (3) Voltage endurance

A predetermined voltage was applied to both ends of a 10 cm coated CNT electric wire, electricity was continuously distributed thereto for 10 minutes, and whether or not there were disconnection and degradation of the insulating coating layer was visually checked. A coated CNT electric wire in which no abnormality was observed at a voltage of 50 V was evaluated as being satisfactory "O", a coated CNT electric wire in which no abnormality was observed at a voltage of 2 V was evaluated as being substantially satisfactory "△", and a coated CNT electric wire in which abnormality was observed at 2 V was evaluated as being inferior "×".

### (4) Insulation reliability

An insulation breakage test for evaluating insulation reliability was conducted by a method in accordance with JIS C 3216-5, Article 4. A test result that satisfied the grade 3 described in Table 9 in JIS C 3215-0-1 was evaluated as being significantly satisfactory "⊙", a test result that satisfied the grade 2 was evaluated as being satisfactory "∘", a test result that satisfied the grade 1 was evaluated as being substantially satisfactory "△", and a test result that did not satisfy any grades was evaluated as being inferior "×".

### (5) Handling ability

A stationary flexibility test for evaluating handling ability was conducted by a method in accordance with JIS C 3662-2, Article 3.5. A test result of equal to or greater than 1.0 m was evaluated as being satisfactory "∘", a test result of equal to or greater than 0.5 m and less than 1.0 m was evaluated as being substantially satisfactory "△", and a test result of less than 0.5 m was evaluated as being inferior "×".

Results of the aforementioned evaluation are shown in Table 1 below.

**[Table 1]**

| | Resin type of insulating coating layer | Sectional area of CNT wire (mm²) | Sectional area of insulating coating layer (mm²) | Proportion of sectional areas | Form of CNT wire | Proportion of Young's moduli | Thickness deviation rate (%) | Heat diss ipation ability | Durability in bending | Voltage endurance | Insulation reliability | Handling ability |
|---|---|---|---|---|---|---|---|---|---|---|---|---|
| Example 1 | Polyethylene | 0.031 | 0,049 | 1,8 | Single-strandedwire | 0,0003 | 73 | ○ | ○ | △ | ○ | △ |
| Example 2 | Polyethylene | 0.031 | 0,25 | 8,0 | Single-strandedwire | 0,0003 | 05 | △ | ○ | △ | Ⓞ | ○ |
| Example 3 | Polyethylene | 0,75 | 1,3 | 1,7 | Twisted wire of 24 single-stranded wires | 0,0003 | 77 | ○ | o | △ | Ⓞ | △ |
| Example 4 | Polyethylene | 075 | 1,6 | 2,1 | Twisted wire of 24 single-stranded wires | 0,0003 | 91 | ○ | ○ | △ | Ⓞ | △ |
| Example 5 | Polyethylene | 6,0 | 14 | 2,4 | Twisted wire of 192 single-stranded wires | 0,0003 | 87 | ○ | ○ | ○ | Ⓞ | ○ |
| Example 6 | Polyethylene | 6,0 | 36 | 5, 9 | Twisted wire of 192 single-stranded wires | 0,0003 | 85 | △ | ○ | ○ | Ⓞ | ○ |
| Example 7 | Polyethylene | 11 | 26 | 2,4 | Twisted wire of 384 single-stranded wires | 0,0003 | 87 | ○ | ○ | ○ | Ⓞ | ○ |
| Example 8 | Polyethylene | 12 | 66 | 5,5 | Twisted wire of 384 single-stranded wires | 0.0003 | 85 | △ | ○ | ○ | Ⓞ | ○ |
| Example 9 | Polyvinyl chloride | 6,0 | 15 | 2,5 | Twisted wire of 192 single-stranded wires | 0,0019 | 81 | ○ | ○ | ○ | Ⓞ | ○ |
| Example 10 | Polyvinyl chloride | 6,0 | 26 | 4,4 | Twisted wire of 192 single-stranded wires | 0,0019 | 88 | ○ | ○ | ○ | Ⓞ | ○ |
| Example 11 | Polyvinyl chloride | 6,0 | 9,5 | 1,6 | Twisted wire of 192 single-stranded wires | 0,0019 | 75 | ○ | ○ | △ | △ | △ |
| Example 12 | Polyvinyl chloride | 12 | 19 | 1,6 | Twisted wire of 104 single-stranded wires | 0,0019 | 79 | ○ | ○ | △ | ○ | △ |
| Comparative Example 1 | Polyethylene | 0.031 | *0.022* | *0.69* | Single-strandedwire | 0,0003 | 56 | ○ | ○ | × | △ | × |
| Comparative Example 2 | Polyethylene | 075 | 1,0 | *1.3* | Twisted wire of 24 single-stranded wires | 0,0003 | 68 | ○ | ○ | × | ○ | × |
| Comparative Example 3 | Polyethylene | 6,0 | 4,3 | *0.7* | Twisted wire of 192 single-stranded wires | 0,0003 | 66 | ○ | ○ | × | ○ | × |
| Comparative Example 4 | Polyvinyl chloride | 6,0 | 3.3 | *0.55* | Twisted wire of 192 single-stranded wires | 0,0019 | 53 | ○ | ○ | × | △ | × |
| Comparative Example 5 | Polyethylene | 0 031 (Core wire: Cu) | 0,065 | 2,1 | Single-strandedwire | 0,0062 | 82 | | × | △ | Ⓞ | ○ |
| Comparative Example 6 | Polyethylene | 0.031 (Core wire Al) | 0,059 | 1,9 | Single-strandedwire | 0,011 | 85 | - | × | △ | Ⓞ | △ |
| Note) Underlines and italics in the table indicate that the values are outside the scope of the present invention. | | | | | | | | | | | | |

As shown in Table 1 above, in Examples 1 to 12, the proportions of the sectional areas of the insulating coating layers in the radial direction with respect to the sectional areas of the CNT wires in the radial direction were greater than 1.5, and all heat dissipation ability, durability in bending, voltage endurance, insulation reliability, and handling ability were evaluated as being substantially satisfactory or better.

Further, in Examples 1 to 12, full-widths at half maximum Δθ in azimuth angle were equal to or less 60°. Therefore, the CNT aggregates had excellent orientations in the coated CNT electric wires in Examples 1 to 12. Further, in Examples 1 to 12, all q values of peak tops at (10) peaks were equal to or greater than 2.0 nm⁻¹ and equal to or less than 5.0 nm⁻¹, and all full-widths at half maximum Δq were equal to or greater than 0.1 nm⁻¹ and equal to or less than 2.0 nm⁻¹. Therefore, the CNTs were present with high density in the coated CNT electric wires in Examples 1 to 12.

In Examples 1, 3 to 5, 7, and 9 to 12, the proportions of the sectional areas of the insulating coating layers in the radial direction with respect to the sectional areas of the CNT wires in the radial direction were equal to or less than 4.5, and excellent heat dissipation ability was achieved. Also, in Examples 2 to 10, the proportions of the sectional areas of the insulating coating layers in the radial direction with respect to the sectional areas of the CNT wires in the radial direction were equal to or greater than 1.7, and excellent insulation reliability was achieved. Also, in Examples 5 to 10, the proportions of the sectional areas of the insulating coating layers in the radial direction with respect to the sectional areas of the CNT wires in the radial direction were equal to or greater than 2.4, and excellent voltage endurance and handling ability were achieved. In other words, in Examples 3 to 5, 7, 9, and 10 in which the proportions of the sectional areas of the insulating coating layers in the radial direction with respect to the sectional areas of the CNT wires in the radial direction were 1.7 to 4.5, satisfactory heat dissipation ability, durability in bending, and insulation reliability were achieved while sufficient voltage endurance and handling ability were secured. In Examples 5, 7, 9, and 10 in which the proportions of the sectional areas of the insulating coating layers in the radial direction with respect to the sectional areas of the CNT wires in the radial direction were 2.4 to 4.5 in particular, all the heat dissipation ability, the durability in bending, the voltage endurance, the insulation reliability, and the handling ability were satisfactory.

On the other hand, in Comparative Examples 1 to 6, the proportions of the sectional areas of the insulating coating layers in the radial direction with respect to the sectional areas of the CNT wires in the radial direction were equal to or less than 1.5, and both voltage endurance and handling ability were inferior. In the case in which a conductive element is a copper wire (Comparative Example 5) or an aluminum wire (Comparative Example 6), durability in bending was inferior.

### List of Reference Signs

1 coated carbon nanotube electric wire,
10 carbon nanotube wire,
11 carbon nanotube aggregate,
11a carbon nanotube,
21 insulating coating layer

## Claims

1. A coated carbon nanotube electric wire comprising:
a carbon nanotube wire including one or more carbon nanotube aggregates configured of a plurality of carbon nanotubes; and
an insulating coating layer coating the carbon nanotube wire,
wherein a q value of a peak top at a (10) peak of scattering intensity based on X-ray scattering indicating density of the plurality of carbon nanotubes is equal to or greater than 2.0 nm⁻¹ and equal to or less than 5.0 nm⁻¹, and a full-width at half maximum Δq is equal to or greater than 0.1 nm⁻¹ and equal to or less than 2.0 nm⁻¹,
a proportion of a sectional area of the insulating coating layer in a radial direction with respect to a sectional area of the carbon nanotube wire in the radial direction is greater than 1.5,
the sectional area of the carbon nanotube wire in the radial direction is equal to or greater than 0.031 mm², and
the sectional area of the insulating coating layer in the radial direction is equal to or greater than 0.049 mm².

2. The coated carbon nanotube electric wire according to claim 1, wherein the proportion of the sectional area of the insulating coating layer in the radial direction with respect to the sectional area of the carbon nanotube wire in the radial direction is equal to or greater than 1.7.

3. The coated carbon nanotube electric wire according to claim 1, wherein the proportion of the sectional area of the insulating coating layer in the radial direction with respect to the sectional area of the carbon nanotube wire in the radial direction is equal to or greater than 2.4.

4. The coated carbon nanotube electric wire according to any one of claims 1 to 3, wherein the proportion of the sectional area of the insulating coating layer in the radial direction with respect to the sectional area of the carbon nanotube wire in the radial direction is equal to or less than 4.5.

5. The coated carbon nanotube electric wire according to claim 1, wherein the proportion of the sectional area of the insulating coating layer in the radial direction with respect to the sectional area of the carbon nanotube wire in the radial direction is equal to or greater than 1.7 and equal to or less than 4.5.

6. The coated carbon nanotube electric wire according to claim 1, wherein the proportion of the sectional area of the insulating coating layer in the radial direction with respect to the sectional area of the carbon nanotube wire in the radial direction is equal to or greater than 2.4 and equal to or less than 4.5.

7. The coated carbon nanotube electric wire according to any one of claims 1 to 6,
wherein the sectional area of the carbon nanotube wire in the radial direction is equal to or greater than 6.0 mm².

8. The coated carbon nanotube electric wire according to any one of claims 1 to 7,
wherein a proportion of a Young's modulus of a material configuring the insulating coating layer with respect to a Young's modulus of the carbon nanotube wire is equal to or greater than 0.00001 and equal to or less than 0.5.

9. The coated carbon nanotube electric wire according to claim 8,
wherein the proportion of the Young's modulus of the material configuring the insulating coating layer with respect to the Young's modulus of the carbon nanotube wire is equal to or greater than 0.0005 and equal to or less than 0.1.

10. The coated carbon nanotube electric wire according to any one of claims 1 to 9,
wherein the carbon nanotube wire includes a plurality of the carbon nanotube aggregates, and a full-width at half maximum Δθ in azimuth angle in azimuth plot based on small-angle X-ray scattering indicating an orientation of the plurality of the carbon nanotube aggregates is equal to or less than 60°.

11. The coated carbon nanotube electric wire according to any one of claims 1 to 10, wherein a thickness deviation rate of the insulating coating layer is equal to or greater than 50%.

12. The coated carbon nanotube electric wire according to any one of claims 1 to 10, wherein a thickness deviation rate of the insulating coating layer is equal to or greater than 70%.

## Patentansprüche

1. Ein beschichteter elektrischer Draht aus Kohlenstoffnanoröhren, umfassend:
einen Kohlenstoffnanoröhrendraht, der ein oder mehrere Kohlenstoffnanoröhrenaggregate enthält, die aus einer Vielzahl von Kohlenstoffnanoröhren bestehen; und
eine isolierende Überzugsschicht, die den Kohlenstoffnanoröhrendraht umhüllt,
wobei ein q-Wert einer Spitze an einem (10) Peak der Streuintensität auf der Grundlage von Röntgenstreuung, die die Dichte der Mehrzahl von Kohlenstoffnanoröhren anzeigt, gleich oder größer als 2,0 nm⁻¹ und gleich oder kleiner als 5,0 nm⁻¹ ist, und eine volle Breite beim halben Maximum Δ q gleich oder größer als 0,1 nm⁻¹ und gleich oder kleiner als 2,0 nm⁻¹ ist,
ein Verhältnis der Querschnittsfläche der isolierenden Überzugsschicht in radialer Richtung zu der Querschnittsfläche des Kohlenstoffnanoröhrendrahtes in radialer Richtung größer als 1,5 ist,
die Querschnittsfläche des Kohlenstoffnanoröhrendrahtes in radialer Richtung gleich oder größer als 0,031 mm ist² und
die Querschnittsfläche der isolierenden Überzugsschicht in radialer Richtung gleich oder größer ist als 0,049 mm² .

2. Beschichteter elektrischer Kohlenstoffnanoröhrendraht gemäß Anspruch 1, wobei das Verhältnis der Querschnittsfläche der isolierenden Überzugsschicht in radialer Richtung zur Querschnittsfläche des Kohlenstoffnanoröhrendrahtes in radialer Richtung gleich oder größer als 1,7 ist.

3. Beschichteter elektrischer Kohlenstoffnanoröhrendraht gemäß Anspruch 1, wobei der Anteil der Querschnittsfläche der isolierenden Überzugsschicht in radialer Richtung in Bezug auf die Querschnittsfläche des Kohlenstoffnanoröhrendrahts in radialer Richtung gleich oder größer als 2,4 ist.

4. Beschichteter elektrischer Kohlenstoffnanoröhrendraht gemäß einem der Ansprüche 1 bis 3, wobei das Verhältnis der Querschnittsfläche der isolierenden Überzugsschicht in radialer Richtung zur Querschnittsfläche des Kohlenstoffnanoröhrendrahtes in radialer Richtung gleich oder kleiner als 4,5 ist.

5. Beschichteter elektrischer Kohlenstoffnanoröhrendraht gemäß Anspruch 1, wobei der Anteil der Querschnittsfläche der isolierenden Überzugsschicht in radialer Richtung in Bezug auf die Querschnittsfläche des Kohlenstoffnanoröhrendrahts in radialer Richtung gleich oder größer als 1,7 und gleich oder kleiner als 4,5 ist.

6. Beschichteter elektrischer Kohlenstoffnanoröhrendraht gemäß Anspruch 1, wobei der Anteil der Querschnittsfläche der isolierenden Überzugsschicht in radialer Richtung in Bezug auf die Querschnittsfläche des Kohlenstoffnanoröhrendrahtes in radialer Richtung gleich oder größer als 2,4 und gleich oder kleiner als 4,5 ist.

7. Beschichteter elektrischer Draht aus Kohlenstoffnanoröhren gemäß einem der Ansprüche 1 bis 6,
wobei die Querschnittsfläche des Kohlenstoffnanoröhrendrahtes in radialer Richtung gleich oder größer als 6,0 mm² ist.

8. Beschichteter elektrischer Draht aus Kohlenstoffnanoröhren gemäß einem der Ansprüche 1 bis 7,
wobei ein Anteil eines Elastizitätsmoduls eines Materials, das die isolierende Überzugsschicht konfiguriert, in Bezug auf einen Elastizitätsmodul des Kohlenstoffnanoröhrendrahtes gleich oder größer als 0,00001 und gleich oder kleiner als 0,5 ist.

9. Beschichteter elektrischer Draht aus Kohlenstoffnanoröhren nach Anspruch 8,
wobei das Verhältnis des Elastizitätsmoduls des Materials, das die isolierende Überzugsschicht bildet, zum Elastizitätsmodul des Kohlenstoffnanoröhrendrahtes gleich oder größer als 0,0005 und gleich oder kleiner als 0,1 ist.

10. Beschichteter elektrischer Draht aus Kohlenstoffnanoröhren gemäß einem der Ansprüche 1 bis 9,
wobei der Kohlenstoffnanoröhrendraht eine Vielzahl der Kohlenstoffnanoröhrenaggregate enthält und eine volle Breite bei halbem Maximum Δθ im Azimutwinkel in der Azimutdarstellung auf der Grundlage der Röntgenkleinwinkelstreuung, die eine Orientierung der Vielzahl der Kohlenstoffnanoröhrenaggregate anzeigt, gleich oder kleiner als 60° ist.

11. Beschichteter elektrischer Kohlenstoffnanoröhrendraht gemäß einem der Ansprüche 1 bis 10, wobei eine Dickenabweichungsrate der isolierenden Überzugsschicht gleich oder größer als 50% ist.

12. Beschichteter elektrischer Kohlenstoffnanoröhrendraht gemäß einem der Ansprüche 1 bis 10, wobei eine Dickenabweichungsrate der isolierenden Überzugsschicht gleich oder größer als 70% ist.

## Revendications

1. Fil électrique revêtu de nanotubes de carbone comprenant :
un fil de nanotubes de carbone comprenant un ou plusieurs agrégats de nanotubes de carbone constitués d'une pluralité de nanotubes de carbone ; et
une couche de revêtement isolant recouvrant le fil de nanotubes de carbone,
dans lequel une valeur q d'un sommet de crête à une crête (10) d'intensité de diffusion sur la base de la diffusion de rayons x indiquant la densité de la pluralité des nanotubes de carbone est supérieure ou égale à 2,0 nm⁻¹ et inférieure ou égale à 5,0 nm⁻¹, et une largeur à mi-hauteur Δq est supérieure ou égale à 0,1 nm⁻¹ et inférieure ou égale à 2,0 nm⁻¹,
une proportion d'une section de la couche de revêtement isolant dans une direction radiale par rapport à la section du fil de nanotubes de carbone dans la direction radiale est supérieure à 1,5,
la section du fil de nanotubes de carbone dans la direction radiale est supérieure ou égale à 0,031 mm², et
la section du fil de nanotubes de carbone dans la direction radiale est supérieure ou égale à 0,049 mm².

2. Fil électrique revêtu de nanotubes de carbone selon la revendication 1, dans lequel la proportion d'une section de la couche de revêtement isolant dans la direction radiale par rapport à la section du fil de nanotubes de carbone dans la direction radiale est supérieure ou égale à 1,7.

3. Fil électrique revêtu de nanotubes de carbone selon la revendication 1, dans lequel la proportion d'une section de la couche de revêtement isolant dans la direction radiale par rapport à la section du fil de nanotubes de carbone dans la direction radiale est supérieure ou égale à 2,4.

4. Fil électrique revêtu de nanotubes de carbone selon l'une quelconque des revendications 1 à 3, dans lequel la proportion d'une section de la couche de revêtement isolant dans la direction radiale par rapport à la section du fil de nanotubes de carbone dans la direction radiale est supérieure ou égale à 4,5.

5. Fil électrique revêtu de nanotubes de carbone selon la revendication 1, dans lequel la proportion d'une section de la couche de revêtement isolant dans la direction radiale par rapport à la section du fil en nanotubes de carbone dans la direction radiale est supérieure ou égale à 1,7 et inférieure ou égale à 4,5.

6. Fil électrique revêtu de nanotubes de carbone selon la revendication 1, dans lequel la proportion d'une section de la couche de revêtement isolant dans la direction radiale par rapport à la section du fil de nanotubes de carbone dans la direction radiale est supérieure ou égale à 2,4 et inférieure ou égale à 4,5.

7. Fil électrique revêtu de nanotubes de carbone selon l'une quelconque des revendications 1 à 6,
dans lequel la section du fil de nanotubes de carbone dans la direction radiale est supérieure ou égale à 6,0 mm².

8. Fil électrique revêtu de nanotubes de carbone selon l'une quelconque des revendications 1 à 7,
dans lequel une proportion d'un module de Young d'un matériau constituant la couche de revêtement isolant par rapport à un module de Young du fil de nanotubes de carbone est supérieure ou égale à 0,00001 et inférieure ou égale à 0,5.

9. Fil électrique revêtu de nanotubes de carbone selon la revendication 8,
dans lequel la proportion du module de Young du matériau constituant la couche de revêtement isolant par rapport au module de Young du fil de nanotubes de carbone est supérieure ou égale à 0,0005 et inférieure ou égale à 0,1.

10. Fil électrique revêtu de nanotubes de carbone selon l'une quelconque des revendications 1 à 9,
dans lequel le fil de nanotubes de carbone comprend une pluralité des agrégats de nanotubes de carbone, et la largeur à mi-hauteur Δθ dans l'angle d'azimut dans le plot d'azimut basé sur la diffusion des rayons x aux petits angles indiquant une orientation de la pluralité des agrégats de nanotubes de carbone est inférieure ou égale à 60°.

11. Fil électrique revêtu de nanotubes de carbone selon l'une quelconque des revendications 1 à 10, dans lequel un taux d'écart d'épaisseur de la couche de revêtement isolant est supérieur ou égal à 50 %.

12. Fil électrique revêtu de nanotubes de carbone selon l'une quelconque des revendications 1 à 10, dans lequel un taux d'écart d'épaisseur de la couche de revêtement isolant est supérieur ou égal à 70 %.
